# EUROPEAN PATENT SPECIFICATION

(11) **EP 4 119 523 B1**
(45) Date of publication and mention of the grant of the patent: **23.04.2025**
(21) Application number: 21888001.1
(22) Date of filing: 04.02.2021
(51) Int. Cl.: H01F 1/34, C04B 35/64, C04B 35/622, C04B 35/26

(54) **FERRITE MATERIAL, PREPARATION METHOD THEREFOR AND USE THEREOF**
FERRITMATERIAL, HERSTELLUNGSVERFAHREN DAFÜR UND VERWENDUNG DAVON
MATÉRIAU DE FERRITE, SON PROCÉDÉ DE PRÉPARATION ET SON UTILISATION

(30) Priority: 03.11.2020 CN 202011211159
(43) Date of publication of application: 18.01.2023
(73) Proprietor: Hengdian Group DMEGC Magnetics Co., Ltd., Jinhua, Zhejiang 322118 (CN)
(72) Inventor: LV, Feiyu, Jinhua, Zhejiang 322118 (CN); WANG, Yuanzhen, Jinhua, Zhejiang 322118 (CN); ZHANG, Likang, Jinhua, Zhejiang 322118 (CN); XU, Yi, Jinhua, Zhejiang 322118 (CN); ZHOU, Xincheng, Jinhua, Zhejiang 322118 (CN)
(74) Representative: Buzzi, Notaro & Antonielli d'Oulx S.p.A.
(86) International application number: PCT/CN2021/075239
(87) International publication number: WO 2022/095296

(56) References cited:
- EP-A1- 2 886 524
- CN-A- 102 976 729
- CN-A- 103 649 384
- CN-A- 105 174 934
- CN-A- 111 285 673
- CN-A- 111 848 149
- US-A1- 2008 216 484
- US-A1- 2012 133 452
- US-A1- 2014 175 327

## Description

### TECHNICAL FIELD

The present application belongs to the field of microwave communication and magnetic materials, and relates to a ferrite material, a preparation method thereof and use thereof.

### BACKGROUND

With the rapid development of microwave technology, the miniaturization requirement of systems on components is increasingly urgent, and since the volume of ferrite components is much larger than that of other components, the task of miniaturizing and lightweighting the ferrite components is particularly important. Previous research on microwave ferrites has mostly focused on the microwave magnetic loss of the material, while relatively little research is carried out about the dielectric constant. In recent years, device designers have continuously put forward needs for materials with high dielectric constant, especially materials with small linewidth and high dielectric constant. Therefore, the garnet material with high dielectric constant has become one of the hot spots in the microwave ferrite research field.

The existing microwave ferrites have a dielectric constant between 12 and 16, and cannot satisfy the needs for miniaturization and integration due to the large device size in the design of the low-frequency circulator and isolator. If the dielectric constant of the ferrite is increased to more than or equal to 25, the size of isolator and circulator can be reduced by more than or equal to 25%, so as to satisfy the needs for miniaturization and integration.

At present, the microwave ferrite materials with 4πMs = 1850-1950 Gs are widely used in circulators or isolators of the 5G base station. There are some patent documents on microwave ferrite materials with high dielectric constant and preparation methods thereof.

CN107746269A discloses a low-loss-power gyromagnetic material, including the following raw materials in parts by weight: 15-20 parts by weight of Bi₂O₃, 22-26 parts by weight of Y₂O₃, 1-2.5 parts by weight of GeO₂, 2-5 parts by weight of CaCO₃, 41-47 parts by weight of Fe₂O₃, 2-5 parts by weight of ZrO₂, 0.2-1 parts by weight of MnCO₃ and 6-10 parts by weight of CaTiO₃. However, in the preparation method of this document, the pre-sintering temperature is high, and additional synthesis of CaTiO₃ is required.

US8696925B2 discloses a garnet ferrite with high dielectric constant, a chemical formula of which is Y_{2.15-2x}Bi_{0.5}Ca_{0.35+2x}Zr_{0.35}VₓFe_{4.65-x}O₁₂ and Bi_{0.9}Ca_{0.9+2x}Y_{1.2-2x}Zr_{0.7}Nb_{0.1}VₓFe_{4.2-x}O₁₂, in which the x ranges are 0-0.8 and 0-0.6, respectively; the raw material in this document includes toxic V₂O₅, the pre-sintering temperature is high, and the production process is complex and has adverse effects on the environment and human health.

EP 2 886 524 A1 discloses a modified garnet composition Bi(Y,Ca)₂Fe_{4.2}M^{I}_{0.4}M^{II}_{0.4}O₁₂ wherein M^{I} is the octahedral substitution for Fe and can be selected from one or more of the following elements: In, Zn, Mg, Zr, Sn, Ta, Nb, Fe, Ti, and Sb, and wherein M^{II} is the tetrahedral substitution for Fe and can be selected from one or more of the following elements: Ga, W, Mo, Ge, V, Si.

5G communication is an important part of the future information infrastructure, which requires microwave as the transmission means, and since circulators and isolators are indispensable devices, the task of miniaturizing and lightweighting those devices is particularly important.

At present, it is a technical problem to be solved how to miniaturize and integrate the circulators and isolators by using a microwave ferrite material with high dielectric constant, small ΔH, high Tc, and appropriate 4πMs.

Corresponding SI magnetics units are: 1 Oe = 1000/4π A/m and 1 Gs = 0.0001 T.

### SUMMARY

An object of the present application is to provide a ferrite material, a preparation method thereof and use thereof. For the ferrite material, the elements Bi and Ca can substitute for a part of the rare earth element Y, and the elements Zr and W can substitute for a part of Fe ions; by using the electromagnetic properties and compensation points of the above elements, the appropriate 4πMs, ΔH and Tc can be obtained, in which the non-magnetic ion Bi³⁺ replaces the Y³⁺ ion on the yttrium iron garnet (YIG) dodecahedral site, greatly increasing the dielectric constant of the material, and reducing the Curie temperature at the same time, and the suitable Bi content in the present application can balance the dielectric constant and Curie temperature. The corresponding preparation process is stable,and has good reproducibility, facilitates to mass production, and greatly reduces the production cost.

In order to achieve the object, the present application adopts the technical solutions below.

In a first aspect, the present application provides a ferrite material, and the ferrite material has a chemical formula of Bi_{1.3}Ca_{x+2y}Y_{1.7-x-2y}Fe_{5-x-y}ZrₓW_{y}O₁₂; the x is 0.3-0.4, and the y is 0.01-1. For example, the x can be 0.3, 0.32, 0.34, 0.35, 0.38, 0.4, etc.; the y can be 0.01, 0.1, 0.2, 0.3, 0.4, 0.5, 0.6, 0.7, 0.8, 1, etc.

In the present application, the elements Bi and Ca in the ferrite material can substitute for a part of the rare earth element Y, and the elements Zr and W can substitute for a part of Fe ions; by using the electromagnetic properties and compensation points of the above elements, the appropriate 4πMs, ΔH and Tc can be obtained, in which the non-magnetic ion Bi³⁺ replaces the Y³⁺ ion on the YIG dodecahedral site, greatly increasing the dielectric constant of the material, and reducing the Curie temperature at the same time.

Optionally, a raw material for preparing the ferrite material includes Bi₂O₃, CaCO₃, Y₂O₃, Fe₂O₃, ZrO₂ and WO₃.

Optionally, the Bi₂O₃, CaCO₃, Y₂O₃, Fe₂O₃, ZrO₂ and WO₃ are proportioned in a stoichiometric ratio of the chemical formula shown above, namely, Bi_{1.3}Ca_{x+2y}Y_{1.7-x-2y}Fe_{5-x-y}ZrₓW_{y}O₁₂.

Optionally, a content of Bi is 33-33.4wt% in the ferrite material, such as 33wt%, 33.1wt%, 33.2wt%, 33.3wt% or 33.4wt%.

In the present application, the Bi content is controlled at 33-33.4wt% in the ferrite material, which can achieve a dielectric constant of about 27.7 and balance the dielectric constant and the Curie temperature at the same time.

In a second aspect, the present application provides a preparation method of the ferrite material according to the first aspect, and the preparation method includes the following steps:
(1) mixing and sintering the raw material of the ferrite material to obtain a precursor of the ferrite material; and
(2) mixing, drying, molding and sintering the precursor of the ferrite material in step (1) to obtain the ferrite material.

The preparation method provided in the present application has stable preparation process and good reproducibility, and the prepared ferrite material has high dielectric constant and Curie temperature, facilitates to mass production, and greatly reduces the production cost.

Optionally, a method of the mixing in step (1) includes ball milling.

Optionally, the ball milling includes placing the raw material of the ferrite material, a solvent and mill balls into a ball milling jar to perform the ball milling.

Optionally, the solvent includes water and/or an organic solvent.

Optionally, the organic solvent includes alcohol and/or acetone, further optionally alcohol.

In the present application, the reason why alcohol can be optionally selected is that, as an organic solvent, alcohol has good dispersion effect, can promote the ball milling efficiency of ball milling, and reduce the influence on the material.

Optionally, the mill balls include zirconia mill balls.

Optionally, a rotational speed of the ball milling is 50-100 r/min, such as 50 r/min, 60 r/min, 70 r/min, 80 r/min, 90 r/min or 100 r/min.

Optionally, a time of the ball milling is 10-20 h, such as 10 h, 11 h, 12 h, 13 h, 14 h, 15 h, 16 h, 17 h, 18 h, 19 h or 20 h.

Optionally, a drying operation is performed before the sintering in step (1).

Optionally, a temperature of the drying is 100-200°C, such as 100°C, 110°C, 120°C, 130°C, 140°C, 150°C, 160°C, 170°C, 180°C, 190°C or 200°C.

Optionally, a time of the drying is 10-20 h, such as 10 h, 11 h, 12 h, 13 h, 14 h, 15 h, 16 h, 17 h, 18 h, 19 h or 20 h.

Optionally, a heating rate of the sintering in step (1) is 1-3°C/min, such as 1°C/min, 1.5°C/min, 2°C/min, 2.5°C/min or 3°C/min.

Optionally, a temperature of the sintering in step (1) is 790-830°C, such as 790°C, 800°C, 810°C, 820°C or 830°C.

Optionally, a time of the sintering is 4-10 h, such as 4 h, 5 h, 6 h, 7 h, 8 h, 9 h or 10 h.

Optionally, a method of the mixing in step (2) includes ball milling;

Optionally, the ball milling includes placing the precursor of the ferrite material, a solvent and mill balls into a ball milling jar to perform the ball milling;

Optionally, the solvent includes water and/or an organic solvent.

Optionally, the organic solvent includes alcohol and/or acetone.

Optionally, the mill balls include zirconia mill balls.

Optionally, a rotation speed of the mill balls is 50-100 r/min, such as 50 r/min, 60 r/min, 70 r/min, 80 r/min, 90 r/min or 100 r/min.

Optionally, a time of the ball milling is 30-40 h, such as 30 h, 32 h, 34 h, 35 h, 38 h or 40 h.

Optionally, a temperature of the drying in step (2) is 100-200°C, such as 100°C, 110°C, 120°C, 130°C, 140°C, 150°C, 160°C, 170°C, 180°C, 190°C or 200°C.

Optionally, a time of the drying is 10-20 h, such as 10 h, 11 h, 12 h, 13 h, 14 h, 15 h, 16 h, 17 h, 18h, 19h or 20h.

Optionally, a polyvinyl alcohol solution is added into the dried powder.

In the present application, the polyvinyl alcohol acts as a binder, and enables the dried powder particles to contact with each other more closely, which is beneficial to the subsequent molding.

Optionally, based on the dried powder being 100%, an addition amount of the polyvinyl alcohol solution is 0.8-1.5%, such as 0.8%, 1%, 1.2% or 1.5%.

Optionally, a method of the molding in step (2) includes compression molding.

Optionally, a molding density of the molded material is 3.5-3.6 g/cm³, such as 3.5 g/cm³, 3.52 g/cm³, 3.55 g/cm³, 3.58 g/cm³ or 3.6 g/cm³.

The sintering in step (2) includes three heating operations, and the heating operations includes primary heating, secondary heating and tertiary heating.

In the present application, the reason for performing three heating operations in the sintering process after molding is that the primary heating is mainly a process of moisture evaporating and binder volatilizing in the blank, which requires heating slowly, so that the blank can be protected from the cracking caused by the rapid volatilization of the moisture and binder. The second-stage heating mainly includes the gradual shrinkage of blank, the solid-phase reaction among the particles of the blank, and the crystal grain formation, during which the heating rate can be faster; the third-stage heating is mainly to inhibit the volatilization of Bi₂O₃ and accelerate the substitution of Bi ions.

Optionally, a heating rate of the heating operations is 1.5-3.5°C/min, such as 1.5°C/min, 2°C/min, 2.5°C/min, 3°C/min or 3.5°C/min.

Optionally, a temperature to which the primary heating leads is 450-550°C, such as 450°C, 480°C, 500°C, 520°C or 550°C.

Optionally, a temperature to which the secondary heating leads is 750-850°C, such as 750°C, 760°C, 770°C, 800°C, 820°C, 840°C or 850°C.

Optionally, a temperature to which the tertiary heating leads is 1020-1080°C, such as 1020°C, 1040°C, 1050°C, 1070°C or 1080°C.

Optionally, a sintering time after the heating is 6-10 h, such as 6 h, 7 h, 8 h, 9 h or 10 h.

As an optional technical solution, in the present application, the preparation method of the ferrite material includes the following steps:
(1) adding the raw material of the ferrite material, alcohol and zirconia mill balls into a ball milling jar, performing ball milling at a ball milling speed of 50-100 r/min for 10-20 h, performing drying in an oven at a drying temperature of 100-200°C for 10-20 h, and performing sintering at a sintering temperature of 790-830°C for 4-10 h, so as to obtain a precursor of the ferrite material; and
(2) adding the precursor of the ferrite material in step (1), alcohol and zirconia mill balls into a ball milling jar, performing ball milling at a ball milling speed of 50-100 r/min for 30-40 h, performing drying in an oven at a drying temperature of 100-200°C for 10-20 h, and adding a polyvinyl alcohol solution to perform compression molding, so as to obtain a molded material with a molding density of 3.5-3.6 g/cm³, and heating the molded material to 450-550°C at a heating rate of 1.5-3.5°C/min, then heating the molded material to 750-850°C at a heating rate of 1.5-3.5°C/min, finally heating the molded material continuously to a sintering temperature of 1020-1080°C at a heating rate of 1.5-3.5°C/min and sintering the material for 6-10 h, so as to obtain the ferrite material.

In a third aspect, the present application provides use of the ferrite material according to the first aspect, and the use includes using the ferrite material in microwave communication and/or using the ferrite material as a magnetic material.

Compared with the prior art, the present application has the beneficial effects below.
(1) For the ferrite material provided by the present application, the elements Bi and Ca can substitute for a part of the rare earth element Y, and the elements Zr and W can substitute for a part of Fe ions; by using the electromagnetic properties and compensation points of the above elements, the appropriate 4πMs, ΔH and Tc can be obtained, in particular, by controlling the Bi content at 33-33.4wt% in the formula of the ferrite material, a dielectric constant of about 27.7 can be realized, in which the non-magnetic ion Bi³⁺ replaces the Y³⁺ ion on the YIG dodecahedral site, greatly increasing the dielectric constant of the material, and reducing the Curie temperature at the same time, and the suitable Bi content in the present application can balance the dielectric constant and the Curie temperature. Therefore, the ferrite material (4πMs = 1850 ± 50 (Gs)) provided by the present application has a dielectric constant of 28 ± 2, ΔH of less than 60 (oe), a Curie temperature of less than 240°C, and a density of more than 5.9 g/cm³.
(2) The preparation method provided by the present application has stable preparation process and good reproducibility, facilitates to mass production, and greatly reduces the production cost.

### DETAILED DESCRIPTION

The technical solutions of the present application are further described below through specific embodiments. It should be apparent to those skilled in the art that the embodiments are merely used for a better understanding of the present application, and should not be regarded as a specific limitation of the present application.

### Example 1

This example provides a ferrite material, and the ferrite material has a chemical formula of (Bi_{1.3}C_{30.5}Y_{1.2}Fe_{4.6}Zr_{0.3}W_{0.1}O₁₂). A raw material of the ferrite material includes 99.95% pure Y₂O₃, 99.95% pure Bi₂O₃, 99% pure CaCO₃, 99.2% pure ZrO₂, 99.5% pure Fe₂O₃, and 99.5% pure WO₃.

A preparation method of the ferrite material includes the following steps:
(1) A raw material of the ferrite material proportioned according to the above chemical formula, alcohol and zirconia mill balls were added into a ball milling jar at a weight ratio of 1000:1000:4000, and subjected to ball milling at a ball milling rotation speed of 60 r/min for 15 hours, the ball-milled slurry was placed in an oven and dried at a drying temperature of 120°C for 16 h, and the dried powder was passed through a 60-mesh screen, placed into an air sintering furnace for pre-sintering, heated to a highest pre-sintering temperature of 830°C at a rate of 1.5°C/min, and sintered for 6 hours, so as to obtain a precursor of the ferrite material; and
(2) The precursor of the ferrite material in step (1), alcohol and zirconia mill balls were added into a ball milling jar at a weight ratio of 1000:1000:5000, and subjected to ball milling at a ball milling speed of 60 r/min for 32 h, the mixture was dried in an oven at a drying temperature of 120°C for 16 h, and the dried powder was added with a polyvinyl alcohol solution with an addition amount of 1.3% mass of the dried powder, and subjected to compression molding with a 100T press, so as to obtain a material with a molding density of 3.5 g/cm³, and the molded material was heated to 500°C at a heating rate of 2°C/min, then heated to 800°C at a heating rate of 1.66°C/min, then heated continuously to a sintering temperature of 1020°C at 3°C/min and sintered for 10 h, and subjected to polishing process, so as to obtain the ferrite material.

### Example 2

This example provides a ferrite material, and the ferrite material has a chemical formula of Bi_{1.3}Ca_{0.5}Y_{1.2}Fe_{4.55}Zr_{0.4}W_{0.05}O₁₂. A raw material of the ferrite material includes 99.95% pure Y₂O₃, 99.95% pure Bi₂O₃, 99% pure CaCO₃, 99.2% pure ZrO₂, 99.5% pure Fe₂O₃, and 99.5% pure WO₃.

A preparation method of the ferrite material includes the following steps:
(1) A raw material of the ferrite material proportioned according to the above chemical formula, alcohol and zirconia mill balls were added into a ball milling jar at a weight ratio of 1000:1000:4000, and subjected to ball milling at a ball milling rotation speed of 100 r/min for 10 hours, the ball-milled slurry was placed in an oven and dried at a drying temperature of 180°C for 12 h, and the dried powder was passed through a 60-mesh screen, placed into an air sintering furnace for pre-sintering, heated to a highest pre-sintering temperature of 810°C at a rate of 2°C/min, and sintered for 10 hours, so as to obtain a precursor of the ferrite material; and
(2) The precursor of the ferrite material in step (1), alcohol and zirconia mill balls were added into a ball milling jar at a weight ratio of 1000:1000:5000, and subjected to ball milling at a ball milling speed of 80 r/min for 35 h, the mixture was dried in an oven at a drying temperature of 150°C for 15 h, and the dried powder was added with a polyvinyl alcohol solution with an addition amount of 0.8% mass of the dried powder, and subjected to compression molding with a 100T press, so as to obtain a material with a molding density of 3.6 g/cm³, and the material was heated to 500°C from the room temperature at a heating rate of 2°C/min, then heated to 800°C at a rate of 1.66°C/min, finally heated continuously to a sintering temperature of 1050°C at 3°C/min and sintered for 8 h, and subjected to polishing process, so as to obtain the ferrite material.

### Example 3

This example provides a ferrite material, and the ferrite material has a chemical formula of Bi_{1.3}Ca_{0.4}Y_{1.3}Fe_{4.65}Zr_{0.3}W_{0.05}O₁₂. A raw material of the ferrite material includes 99.95% pure Y₂O₃, 99.95% pure Bi₂O₃, 99% pure CaCO₃, 99.2% pure ZrO₂, 99.5% pure Fe₂O₃, and 99.5% pure WO₃.

A preparation method of the ferrite material includes the following steps:
(1) A raw material of the ferrite material proportioned according to the above chemical formula, alcohol and zirconia mill balls were added into a ball milling jar at a weight ratio of 1000: 1000:4000, and subjected to ball milling at a ball milling rotation speed of 100 r/min for 10 hours, the ball-milled slurry was placed in an oven and dried at a drying temperature of 180°C for 12 h, and the dried powder was passed through a 60-mesh screen, placed into an air sintering furnace for pre-sintering, heated to a highest pre-sintering temperature of 790°C at a rate of 1.5°C/min, and sintered for 6 hours, so as to obtain a precursor of the ferrite material; and
(2) The precursor of the ferrite material in step (1), alcohol and zirconia mill balls were added into a ball milling jar at a weight ratio of 1000:1000:5000, and subjected to ball milling at a ball milling speed of 80 r/min for 35 h, the mixture was dried in an oven at a drying temperature of 150°C for 15 h, and the dried powder was added with a polyvinyl alcohol solution with an addition amount of 1% mass of the dried powder, and subj ected to compression molding with a 100T press, so as to obtain a material with a molding density of 3.55 g/cm³, and the material was heated to 500°C from the room temperature at a heating rate of 2°C/min, then heated to 800°C at a rate of 1.66°C/min, finally heated continuously to a sintering temperature of 1080°C at 3°C/min and sintered for 6 h, and subjected to polishing process, so as to obtain the ferrite material.

### Example 4

This example differs from Example 1 in that the sintering temperature after the heating in step (2) was 1000°C, and other preparation methods and parameters were consistent with Example 1.

### Example 5

This example differs from Example 1 in that the sintering temperature after the heating in step (2) was 1100°C.

Other preparation methods and parameters were consistent with Example 1.

### Example 6

This example differs from Example 1 in that the sintering time after the heating in step (2) of this example was 25 h.

Other preparation methods and parameters were consistent with Example 1.

### Example 7

This example differs from Example 1 in that the sintering time after the heating in step (2) of this example was 3 h.

Other preparation methods and parameters were consistent with Example 1.

Comparative Example 1

This comparative example provides a ferrite material, and the ferrite material has a chemical formula of Bi_{1.3}Ca_{0.3}Y_{1.4}Fe_{4.7}Zr_{0.3}O₁₂. A raw material of the ferrite material includes 99.95% pure Y₂O₃, 99.95% pure Bi₂O₃, 99% pure CaCO₃, 99.2% pure ZrO₂, and 99.5% pure Fe₂0₃.

A preparation method of the ferrite material includes the following steps:
(1) A raw material of the ferrite material proportioned according to the above chemical formula, alcohol and zirconia mill balls were added into a ball milling jar at a weight ratio of 1000:1000:4000, and subjected to ball milling at a ball milling rotation speed of 60 r/min for 15 hours, the ball-milled slurry was placed in an oven and dried at a drying temperature of 120°C for 16 h, and the dried powder was passed through a 60-mesh screen, placed into an air sintering furnace for pre-sintering, heated to a highest pre-sintering temperature of 830°C at a rate of 1.5°C/min, and sintered for 6 hours, so as to obtain a precursor of the ferrite material; and
(2) The precursor of the ferrite material in step (1), alcohol and zirconia mill balls were added into a ball milling jar at a weight ratio of 1000:1000:5000, and subjected to ball milling at a ball milling speed of 60 r/min for 32 h, the mixture was dried in an oven at a drying temperature of 120°C for 16 h, and the dried powder was added with a polyvinyl alcohol solution with an addition amount of 1.3% mass of the dried powder, and subjected to compression molding with a 100T press, so as to obtain a material with a molding density of 3.5 g/cm³, and the molded material was heated to 500°C at a heating rate of 2°C/min, then heated to 800°C at a heating rate of 1.66°C/min, then heated continuously to a sintering temperature of 1020°C at 3°C/min and sintered for 10 h, and subjected to polishing process, so as to obtain the ferrite material.

### Comparative Example 2

This comparative example provides a ferrite material, and the ferrite material has a chemical formula of Bi_{1.3}Ca_{0.9}Y_{1.0}Fe_{4.4}Zr_{0.5}W_{0.1}O₁₂. A raw material of the ferrite material includes 99.95% pure Y₂O₃, 99.95% pure Bi₂O₃, 99% pure CaCO₃, 99.2% pure ZrO₂, 99.5% pure Fe₂O₃, and 99.5% pure WO₃.

A preparation method of the ferrite material includes the following steps:
(1) A raw material of the ferrite material proportioned according to the above chemical formula, alcohol and zirconia mill balls were added into a ball milling jar at a weight ratio of 1000:1000:4000, and subjected to ball milling at a ball milling rotation speed of 60 r/min for 15 hours, the ball-milled slurry was placed in an oven and dried at a drying temperature of 120°C for 16 h, and the dried powder was passed through a 60-mesh screen, placed into an air sintering furnace for pre-sintering, heated to a highest pre-sintering temperature of 830°C at a rate of 1.5°C/min, and sintered for 6 hours, so as to obtain a precursor of the ferrite material; and
(2) The precursor of the ferrite material in step (1), alcohol and zirconia mill balls were added into a ball milling jar at a weight ratio of 1000:1000:5000, and subjected to ball milling at a ball milling speed of 60 r/min for 32 h, the mixture was dried in an oven at a drying temperature of 120°C for 16 h, and the dried powder was added with a polyvinyl alcohol solution with an addition amount of 1.3% mass of the dried powder, and subjected to compression molding with a 100T press, so as to obtain a material with a molding density of 3.5 g/cm³, and the molded material was heated to 500°C at a heating rate of 2°C/min, then heated to 800°C at a heating rate of 1.66°C/min, then heated continuously to a sintering temperature of 1020°C at 3°C/min and sintered for 10 h, and subjected to polishing process, so as to obtain the ferrite material.

The density of the ferrite materials prepared in Examples 1-7 and Comparative Examples 1-2 was measured by the water displacement method.

The ferrite materials prepared in Examples 1-7 and Comparative Examples 1-2 were processed into thin rods of Φ1.6×22 and measured for dielectric constant ε.

The ferrite materials prepared in Examples 1-7 and Comparative Examples 1-2 were polished into balls of Φ1 and measured for ΔH.

The ferrite materials prepared in Examples 1-7 and Comparative Examples 1-2 were processed into balls of Φ2.5 mm and measured for 4πMs and Curie temperature Tc.

Table 1 shows the results of the above tests on the ferrite materials prepared in Examples 1-7 and Comparative Examples 1-2.

**Table 1**

| | Saturation Magnetization 4πMs (Gs) | Curie Temperature Tc (°C) | Linewidth ΔH (oe) | Dielectric Constant ε | Density (g/cm³ ) |
|---|---|---|---|---|---|
| Standard | 1850±50 | >240 | <60 | 28±2 | >5.9 |
| Example 1 | 1812 | 257 | 57 | 27.9 | 5.97 |
| Example 2 | 1857 | 245 | 41 | 27.7 | 5.98 |
| Example 3 | 1828 | 253 | 46 | 27.7 | 6.01 |
| Example 4 | 1786 | 255 | 86 | 27.8 | 5.85 |
| Example 5 | 1856 | 255 | 95 | 27.5 | 5.65 |
| Example 6 | 1852 | 248 | 88 | 27.8 | 5.45 |
| Example 7 | 1832 | 246 | 98 | 27.8 | 5.65 |
| Comparative Example 1 | 1878 | 262 | 105 | 27.7 | 5.98 |
| Comparative Example 2 | 1678 | 235 | 132 | 27.7 | 5.86 |

By analyzing the data of the specific examples and comparative examples, it can be found that the different ratio of W₂O₃ and ZrO₂, sintering temperature and holding time has great influence on the 4πMs, linewidth and sintering density of the material.

It can be found from the data results of Example 1 and Examples 4-5 that, with excessively low temperature of the sintering process, the crystal grains cannot grow, and the density will be low, leading to a high linewidth; the excessively high sintering temperature will result in bismuth oxide separating out, as well as density decreasing and linewidth deteriorating.

It can be found from the data results of Example 1 and Examples 6-7 that the excessively long sintering time of the sintering process will easily lead to bismuth oxide separating out, resulting in low density and linewidth deterioration; the excessively short sintering time will result in that the crystal grains cannot grow, and still the density will be low and the linewidth will be high.

It can be found from the data results of Example 1 and Comparative Example 1 that, without containing W element, the ferrite material will have a result of relatively high linewidth.

It can be found from the data results of Example 1 and Comparative Example 2 that the excessively high Zr content of the ferrite material will lead to 4πMS decrease and linewidth deterioration.

In summary, it can be seen that the ferrite material provided by the present application can better balance the dielectric constant and Curie temperature, and meanwhile, has the characteristics of small linewidth, high Tc and appropriate 4πMs, and thus can be better used in microwave communication or as a magnetic material.

The object, technical solutions and beneficial effects of the present application are further described in detail by the above specific embodiments, and it should be understood that the foregoing is merely specific embodiments of the present which is limited by the appended claims.

## Claims

1. A ferrite material, **characterised in that**
a chemical formula of the ferrite material is Bi_{1.3}Ca_{x+2y}Y_{1.7-x-2y}Fe_{5- x-y}ZrₓW_{y}O₁₂; the x is 0.3-0.4, and the y is 0.01-1.

2. The ferrite material according to claim 1, wherein a raw material for preparing the ferrite material comprises Bi₂O₃, CaCO₃, Y₂O₃, Fe₂O₃, ZrO₂ and WO₃.

3. The ferrite material according to claim 2, wherein the Bi₂O₃, CaCO₃, Y₂O₃, Fe₂O₃, ZrO₂ and WO₃ are proportioned in a stoichiometric ratio of the chemical formula Bi_{1.3}Ca_{x+2y}Y_{1.7-x-2y}Fe_{5-x- y}ZrₓW_{y}O₁₂.

4. The ferrite material according to any one of claims 1 to 3, wherein a content of Bi is 33-33.4wt% in the ferrite material.

5. A preparation method of the ferrite material according to any one of claims 1 to 4, wherein the preparation method comprises the following steps:
(1) mixing and sintering the raw material of the ferrite material to obtain a precursor of the ferrite material; and
(2) mixing, drying, molding and sintering the precursor of the ferrite material in step (1) to obtain the ferrite material.

6. The preparation method of the ferrite material according to claim 5, wherein a method of the mixing in step (1) comprises ball milling;
optionally, the ball milling comprises placing the raw material of the ferrite material, a solvent and mill balls into a ball milling jar to perform the ball milling;
optionally, the solvent comprises water and/or an organic solvent;
optionally, the organic solvent comprises alcohol and/or acetone, further optionally alcohol;
optionally, the mill balls comprise zirconia mill balls;
optionally, a rotation speed of the mill balls is 50-100 r/min;
optionally, a time of the ball milling is 10-20 h.

7. The preparation method of the ferrite material according to claim 5 or 6, wherein a drying operation is performed before the sintering in step (1);
optionally, a temperature of the drying is 100-200°C;
optionally, a time of the drying is 10-20 h;
optionally, a heating rate of the sintering in step (1) is 1-3°C/min;
optionally, a temperature of the sintering in step (1) is 790-830°C;
optionally, a time of the sintering is 4-10 h.

8. The preparation method of the ferrite material according to any one of claims 5 to 7, wherein a method of the mixing in step (2) comprises ball milling;
optionally, the ball milling comprises placing the precursor of the ferrite material, a solvent and mill balls into a ball milling jar to perform the ball milling;
optionally, the solvent comprises water and/or an organic solvent;
optionally, the organic solvent comprises alcohol and/or acetone, further optionally alcohol;
optionally, the mill balls comprise zirconia mill balls;
optionally, a rotation speed of the mill balls is 50-100 r/min;
optionally, a time of the ball milling is 30-40 h.

9. The preparation method of the ferrite material according to any one of claims 5 to 8, wherein a temperature of the drying in step (2) is 100-200°C;
optionally, a time of the drying is 10-20 h;
optionally, a polyvinyl alcohol solution is added into the dried powder;
optionally, based on the dried powder being 100%, an addition amount of the polyvinyl alcohol solution is 0.8-1.5%;
optionally, a method of the molding in step (2) comprises compression molding;
optionally, a molding density of the molded material is 3.5-3.6 g/cm³.

10. The preparation method of the ferrite material according to any one of claims 5 to 9, wherein the sintering in step (2) comprises three heating operations, and the heating operations comprises primary heating, secondary heating, and tertiary heating;
optionally, a heating rate of the heating operations is 1.5-3.5°C/min;
optionally, a temperature to which the primary heating leads is 450-550°C;
optionally, a temperature to which the secondary heating leads is 750-850°C;
optionally, a temperature to which the tertiary heating leads is 1020-1080°C;
optionally, a sintering time after the heating is 6-10 h.

11. The preparation method of the ferrite material according to any one of claims 5 to 10, wherein the preparation method comprises the following steps:
(1) adding the raw material of the ferrite material, alcohol and zirconia mill balls into a ball milling jar, performing ball milling at a ball milling speed of 50-100 r/min for 10-20 h, performing drying in an oven at a drying temperature of 100-200°C for 10-20 h, and performing sintering at a sintering temperature of 790-830°C for 4-10 h, so as to obtain a precursor of the ferrite material; and
(2) adding the precursor of the ferrite material in step (1), alcohol and zirconia mill balls into a ball milling jar, performing ball milling at a ball milling speed of 50-100 r/min for 30-40 h, performing drying in an oven at a drying temperature of 100-200°C for 10-20 h, and adding a polyvinyl alcohol solution to perform compression molding, so as to obtain a molded material with a molding density of 3.5-3.6 g/cm³, and heating the molded material to 450-550°C at a heating rate of 1.5-3.5°C/min, then heating the molded material to 750-850°C at a heating rate of 1.5-3.5°C/min, finally heating the molded material continuously to a sintering temperature of 1020-1080°C at a heating rate of 1.5-3.5°C/min and sintering the material for 6-10 h, so as to obtain the ferrite material.

12. Use of the ferrite material according to any one of claims 1 to 4, wherein the use comprises using the ferrite material in microwave communication and/or using the ferrite material as a magnetic material.

## Patentansprüche

1. Ferritmaterial, **dadurch gekennzeichnet, dass** eine chemische Formel des Ferritmaterials Bi_{1,3}Ca_{x+2y}Y_{1,7-x-2y}Fe_{5-x-y}ZrₓW_{y}O₁₂ ist; wobei x 0,3 bis 0,4 beträgt und y 0,01 bis 1 beträgt.

2. Ferritmaterial nach Anspruch 1, wobei ein Rohmaterial zur Herstellung des Ferritmaterials Bi₂O₃, CaCO₃, Y₂O₃, Fe₂O₃, ZrO₃ und WO₃ umfasst.

3. Ferritmaterial nach Anspruch 2, wobei Bi₂O₃, CaCO₃, Y₂O₃, Fe₂O₃, ZrO₂ und WO₃ in einem stöchiometrischen Verhältnis der chemischen Formel Bi_{1,3}Ca_{x+2y}Y_{1,7-x-2y}Fe_{5-x-y}ZrₓW_{y}O₁₂ proportioniert sind.

4. Ferritmaterial nach einem der Ansprüche 1 bis 3, wobei der Gehalt an Bi im Ferritmaterial 33-33,4 Gew.-% beträgt.

5. Herstellungsverfahren des Ferritmaterials nach einem der Ansprüche 1 bis 4, wobei das Herstellungsverfahren die folgenden Schritte umfasst:
(1) Mischen und Sintern des Rohmaterials des Ferritmaterials, um ein Vorprodukt des Ferritmaterials zu erhalten; und
(2) Mischen, Trocknen, Formen und Sintern des Vorprodukts des Ferritmaterials in Schritt (1), um das Ferritmaterial zu erhalten.

6. Herstellungsverfahren des Ferritmaterials nach Anspruch 5, wobei ein Verfahren des Mischens in Schritt (1) ein Kugelmahlen umfasst;
wobei das Kugelmahlen optional ein Einbringen des Rohmaterials des Ferritmaterials, eines Lösungsmittels und von Mahlkugeln in ein Kugelmühlengefäß umfasst, um das Kugelmahlen durchzuführen;
wobei das Lösungsmittel optional Wasser und/oder ein organisches Lösungsmittel umfasst;
wobei das organische Lösungsmittel optional Alkohol und/oder Aceton, weiter optional Alkohol, umfasst;
wobei die Mahlkugeln optional Zirkonoxid-Mahlkugeln umfassen;
wobei optional eine Rotationsgeschwindigkeit der Mahlkugeln 50 bis 100 U/min beträgt;
wobei optional eine Zeitdauert des Kugelmahlens 10 bis 20 Stunden beträgt.

7. Herstellungsverfahren des Ferritmaterials nach Anspruch 5 oder 6, wobei vor dem Sintern in Schritt (1) ein Trocknungsvorgang durchgeführt wird;
wobei optional eine Temperatur des Trocknens 100 bis 200 °C beträgt;
wobei optional eine Zeitdauer des Trocknens 10 bis 20 h beträgt;
wobei optional eine Aufheizrate des Sinterns in Schritt (1) 1 bis 3 °C/min beträgt;
wobei optional eine Temperatur des Sinterns in Schritt (1) 790 bis 830 °C beträgt;
wobei optional eine Zeitdauer des Sinterns 4 bis 10 h beträgt.

8. Herstellungsverfahren des Ferritmaterials nach einem der Ansprüche 5 bis 7, wobei ein Verfahren des Mischens in Schritt (2) ein Kugelmahlen umfasst;
wobei das Kugelmahlen optional ein Einbringen des Vorprodukts des Ferritmaterials, eines Lösungsmittels und von Mahlkugeln in ein Kugelmühlengefäß umfasst, um das Kugelmahlen durchzuführen;
wobei das Lösungsmittel optional Wasser und/oder ein organisches Lösungsmittel umfasst;
wobei das organische Lösungsmittel optional Alkohol und/oder Aceton, weiter optional Alkohol, umfasst;
wobei die Mahlkugeln optional Zirkonoxid-Mahlkugeln umfassen;
wobei optional eine Rotationsgeschwindigkeit der Mahlkugeln 50 bis 100 U/min beträgt;
wobei optional eine Zeitdauert des Kugelmahlens 30 bis 40 Stunden beträgt.

9. Herstellungsverfahren des Ferritmaterials nach einem der Ansprüche 5 bis 8, wobei eine Temperatur des Trocknens in Schritt (2) 100 bis 200°C beträgt;
wobei optional eine Zeitdauer des Trocknens 10 bis 20 h beträgt;
wobei optional dem getrockneten Pulver eine Polyvinylalkohollösung zugegeben wird;
wobei optional eine Zugabemenge der Polyvinylalkohollösung, bezogen auf 100 % des getrockneten Pulvers, 0,8 bis 1,5 % beträgt,
wobei optional ein Verfahren des Formens in Schritt (2) ein Formpressen umfasst;
wobei optional eine Formdichte des geformten Materials 3,5 bis 3,6 g/cm³ beträgt.

10. Herstellungsverfahren des Ferritmaterials nach einem der Ansprüche 5 bis 9, wobei das Sintern in Schritt (2) drei Heizvorgänge umfasst und zu den Heizvorgängen ein primäres Erhitzen, ein sekundäres Erhitzen und ein tertiäres Erhitzen gehören;
wobei optional eine Aufheizrate der Heizvorgänge 1,5 bis 3,5 °C/min beträgt;
wobei optional eine Temperatur, zu der das primäre Erhitzen führt, 450 bis 550 °C beträgt;
wobei optional eine Temperatur, zu der das sekundäre Erhitzen führt, 750 bis 850 °C beträgt;
wobei optional eine Temperatur, zu der das tertiäre Erhitzen führt, 1020 bis 1080 °C beträgt;
wobei optional eine Sinterzeit nach dem Erhitzen 6 bis 10 h beträgt.

11. Herstellungsverfahren des Ferritmaterials nach einem der Ansprüche 5 bis 10, wobei das Herstellungsverfahren die folgenden Schritte umfasst:
(1) Zugeben des Rohmaterials des Ferritmaterials, von Alkohol und Zirkoniumdioxid-Mahlkugeln in ein Kugelmühlengefäß, Durchführen eines Kugelmahlens bei einer Kugelmahlgeschwindigkeit von 50 bis100 U/min für 10 bis 20 Stunden, Durchführen eines Trocknens in einem Ofen bei einer Trocknungstemperatur von 100 bis 200 °C für 10 bis 20 Stunden, und Durchführen eines Sinterns bei einer Sintertemperatur von 790 bis 830 °C für 4 bis 10 Stunden, um ein Vorprodukt des Ferritmaterials zu erhalten; und
(2) Zugeben des Vorprodukts des Ferritmaterials in Schritt (1), von Alkohol und Zirkoniumdioxid-Mahlkugeln in ein Kugelmühlengefäß, Durchführen eines Kugelmahlens bei einer Kugelmahlgeschwindigkeit von 50 bis 100 U/min für 30 bis 40 h, Durchführen eines Trocknens in einem Ofen bei einer Trocknungstemperatur von 100 bis 200°C für 10 bis 20 h, und Zugeben einer Polyvinylalkohollösung zum Durchführen eines Pressformens, um ein geformtes Materials mit einer Formdichte von 3,5 bis 3,6 g/cm³ zu erhalten, und Erhitzen des geformten Materials auf 450 bis 550°C bei einer Aufheizrate von 1,5 bis 3,5°C/min, dann Erhitzen des geformten Materials auf 750 bis 850°C bei einer Aufheizrate von 1,5 bis 3,5°C/min und schließlich Erhitzen des geformten Materials kontinuierlich auf eine Sintertemperatur von 1020 bis 1080°C bei einer Aufheizrate von 1,5 bis 3,5°C/min, und Sintern des Materials für 6 bis 10 Stunden, um das Ferritmaterial zu erhalten.

12. Verwendung des Ferritmaterials nach einem der Ansprüche 1 bis 4, wobei die Verwendung eine Verwendung des Ferritmaterials in einer Mikrowellenkommunikation und/oder eine Verwendung des Ferritmaterials als magnetisches Material umfasst.

## Revendications

1. Matériau à base de ferrite, **caractérisé en ce que**,
une formule chimique du matériau à base de ferrite est Bi_{1,3}Ca_{x+2y}Y_{1,7-x-2y}Fe_{5-x-y}ZrₓW_{y}O₁₂ ; où x est de 0,3 à 0,4, et y est de 0,01 à 1.

2. Matériau à base de ferrite selon la revendication 1, dans lequel une matière première pour la préparation du matériau à base de ferrite comprend Bi₂O₃, CaCO₃, Y₂O₃, Fe₂O₃, ZrO₃ et WO₃.

3. Matériau à base de ferrite selon la revendication 2, dans lequel Bi₂O₃, CaCO₃, Y₂O₃, Fe₂O₃, ZrO₂ et WO₃ sont proportionnés dans un rapport stœchiométrique de la formule chimique Bi_{1,3}Ca_{x+2y}Y_{1,7-x-2y}Fe_{5-x- y}ZrₓW_{y}O₁₂.

4. Matériau à base de ferrite selon l'une quelconque des revendications 1 à 3, dans lequel une teneur en Bi est de 33 à 33,4 % en poids dans le matériau à base de ferrite.

5. Procédé de préparation du matériau à base de ferrite selon l'une quelconque des revendications 1 à 4, dans lequel le procédé de préparation comprend les étapes suivantes :
(1) mélanger et fritter la matière première du matériau à base de ferrite pour obtenir un précurseur du matériau à base de ferrite ; et
(2) mélanger, sécher, mouler et fritter le précurseur du matériau à base de ferrite à l'étape (1) pour obtenir le matériau à base de ferrite.

6. Procédé de préparation du matériau à base de ferrite selon la revendication 5, dans lequel un procédé de mélange à l'étape (1) comprend un broyage à billes ;
éventuellement, le broyage à billes consiste à placer la matière première du matériau à base de ferrite, un solvant et des billes de broyeur dans un broyeur à billes pour effectuer le broyage à billes ;
éventuellement, le solvant comprend l'eau et/ou un solvant organique ;
éventuellement, le solvant organique comprend l'alcool et/ou l'acétone, ou éventuellement davantage l'alcool ;
éventuellement, les billes de broyeur comprennent des billes de broyeur à base de zircone;
éventuellement, une vitesse de rotation des billes de broyeur est de 50 à 100 tr/min ; et
éventuellement, une durée de broyage à billes est de 10 à 20 h.

7. Procédé de préparation du matériau à base de ferrite selon la revendication 5 ou 6, dans lequel une opération de séchage est effectuée avant le frittage à l'étape (1) ;
éventuellement, une température de séchage est de 100 à 200 °C ;
éventuellement, la durée de séchage est de 10 à 20 h ;
éventuellement, une vitesse de chauffage du frittage à l'étape (1) est de l à 3°C/min ;
éventuellement, une température du frittage à l'étape (1) est de 790 à 830°C ; et
éventuellement, une durée de frittage est de 4 à 10 h.

8. Procédé de préparation du matériau à base de ferrite selon l'une quelconque des revendications 5 à 7, dans lequel un procédé de mélange à l'étape (2) comprend un broyage à billes ;
éventuellement, le broyage à billes consiste à placer le précurseur du matériau à base de ferrite, un solvant et des billes de broyeur dans un broyeur à billes pour effectuer le broyage à billes ;
éventuellement, le solvant comprend l'eau et/ou un solvant organique ;
éventuellement, le solvant organique comprend l'alcool et/ou l'acétone, ou éventuellement davantage l'alcool ;
éventuellement, les billes de broyeur comprennent des billes de broyeur à base de zircone;
éventuellement, une vitesse de rotation des billes de broyeur est de 50 à 100 tr/min ; et
éventuellement, une durée de broyage à billes est de 30 à 40 h.

9. Procédé de préparation du matériau à base de ferrite selon l'une quelconque des revendications 5 à 8, dans lequel une température de séchage à l'étape (2) est de 100 à 200°C ;
éventuellement, la durée de séchage est de 10 à 20 h ;
éventuellement, une solution d'alcool polyvinylique est ajoutée à la poudre séchée ;
éventuellement, sur la base de la poudre séchée de 100 %, une quantité d'ajout de la solution d'alcool polyvinylique est de 0,8 à 1,5 % ;
éventuellement, un procédé de moulage à l'étape (2) comprend un moulage par compression ; et
éventuellement, une densité de moulage du matériau moulé est de 3,5 à 3,6 g/cm³.

10. Procédé de préparation du matériau à base de ferrite selon l'une quelconque des revendications 5 à 9, dans lequel le frittage à l'étape (2) comprend trois opérations de chauffage, et les opérations de chauffage comprennent le chauffage primaire, le chauffage secondaire et le chauffage tertiaire ;
éventuellement, une vitesse de chauffage des opérations de chauffage est de 1,5 à 3,5 °C / min ;
éventuellement, une température à laquelle amène le chauffage primaire est de 450 à 550°C ;
éventuellement, une température à laquelle amène le chauffage secondaire est de 750 à 850°C ;
éventuellement, une température à laquelle amène le chauffage tertiaire est de 1020 à 1080°C ; et
éventuellement, une durée de frittage après le chauffage est de 6 à 10 h.

11. Procédé de préparation du matériau à base de ferrite selon l'une quelconque des revendications 5 à 10, dans lequel le procédé de préparation comprend les étapes suivantes :
(1) ajouter la matière première du matériau à base de ferrite, un solvant et des billes de broyeur à base de zircone dans un broyeur à billes, effectuer un broyage à billes à une vitesse de broyage à billes de 50 à 100 tr/min pendant 10 à 20 h, effectuer un séchage dans un four à une température de séchage de 100 à 200°C pendant 10 à 20 h, et effectuer un frittage à une température de frittage de 790 à 830°C pendant 4 à 10 h, afin d'obtenir un précurseur du matériau à base de ferrite ; et
(2) ajouter le précurseur du matériau à base de ferrite à l'étape (1), un solvant et des billes de broyeur à base de zircone dans un broyeur à billes, effectuer un broyage à billes à une vitesse de broyage à billes de 50 à 100 tr/min pendant 30 à 40 h, effectuer un séchage dans un four à une température de séchage de 100 à 200°C pendant 10 à 20 h, et ajouter une solution d'alcool polyvinylique pour effectuer un moulage par compression, afin d'obtenir un matériau moulé à une densité de moulage de 3,5 à 3,6 g/cm³, et chauffer le matériau moulé à 450 à 550°C à une vitesse de chauffage de 1,5 à 3,5°C/min, puis chauffer le matériau moulé à 750 à 850°C à une vitesse de chauffage de 1,5 à 3,5°C/min, enfin chauffer en continu le matériau moulé à une température de frittage de 1020 à 1080°C à une vitesse de chauffage de 1,5 à 3,5°C/min et fritter le matériau pendant 6 à 10 h, afin d'obtenir le matériau à base de ferrite.

12. Utilisation du matériau à base de ferrite selon l'une quelconque des revendications 1 à 4, dans lequel l'utilisation comprend l'utilisation du matériau à base de ferrite dans une communication à micro-ondes et/ou l'utilisation du matériau à base de ferrite comme matériau magnétique.
